# EUROPEAN PATENT APPLICATION

(11) **EP 4 763 389 A1**
(43) Date of publication of application: **24.06.2026**
(21) Application number: 24221693.5
(22) Date of filing: 19.12.2024
(51) Int. Cl.: B23C 5/28, B23C 5/06

(54) **TOOL SYSTEM AND ROTARY CUTTING TOOL**

(71) Applicant: Seco Tools AB, 737 82 Fagersta (SE)
(72) Inventor: AGIC, Adnan, SE-737 82 Fagersta (SE); WARNANDER, Robin, SE-737 82 Fagersta (SE)
(74) Representative: Sandvik

(57) **Abstract**

A tool system comprising a tool body (2) of a rotary cutting tool and a closure element (60), the tool body being provided with:
- insert pockets (10);
- a coolant supply recess (30);
- first coolant channels (31) for conveying coolant to a respective first set (40) of coolant discharge channels and having a respective inlet (31a) that opens into the coolant supply recess; and
- second coolant channels (32) for conveying coolant to a respective second set (50) of coolant discharge channels and having a respective inlet (32a) that opens into the coolant supply recess.

Coolant is injectable into each individual insert pocket through one first set (40) of coolant discharge channels and one second set (50) of coolant discharge channels. The closure element (60) is settable in a closing position in the coolant supply recess in order to block the inlets (32a) of the second coolant channels while leaving the inlets (31a) of the first coolant channels unblocked.

## Description

### FIELD OF THE INVENTION AND PRIOR ART

The present invention relates to a tool system according to the preamble of claim 1. The invention also relates to a rotary cutting tool comprising such a tool system.

A rotary cutting tool may be used for performing milling or drilling operations on a workpiece. A rotary cutting tool may be provided with several cutting inserts detachably mounted in a respective insert seat in a tool body of the rotary cutting tool. Each individual cutting insert may be provided with several identical sets of cutting edges, to thereby allow each cutting insert to be turned into different working positions. When a cutting edge of a set of cutting edges has been worn out, the cutting insert may be repositioned in its insert seat and mounted in a new working position with another set of cutting edges in an active cutting position. The insert seats may form part of a respective insert pocket in the tool body, wherein each insert pocket in addition to an insert seat also comprises a chip clearance space in the form of a chip pocket or chip flute provided in the insert pocket adjacent to the insert seat and in front of it as seen in the intended direction of rotation of the tool body. In order to increase the useful life of the cutting inserts, the interface between the cutting inserts and the workpiece may be cooled and lubricated by a flow of coolant during the milling or drilling operation, wherein the coolant may be supplied to the area at each cutting insert through coolant channels in the tool body. The flow of coolant to the interfaces between the cutting inserts and the workpiece will also assist in moving the chips formed during the milling or drilling operation away from the cutting inserts, i.e. chip evacuation.

The supply of coolant to the insert pockets of a tool body of a rotary cutting tool may for instance be achieved in the manner described in US 2021/0220956 A1, where coolant is introduced into a coolant supply recess inside the tool body from coolant supply channels in a tool holder and injected into each individual insert pocket through several coolant discharge channels that open into the associated insert pocket, wherein the coolant discharge channels that open into one and the same insert pocket are jointly connected to the coolant supply recess through a dedicated intermediate coolant channel provided in the tool body.

### OBJECT OF THE INVENTION

The object of the present invention is to provide a new and favourable solution for the supply of coolant to insert pockets in a tool body of a rotary cutting tool.

### SUMMARY OF THE INVENTION

According to the invention, said object is achieved by means of a tool system having the features defined in claim 1.

The tool system according to the invention comprises:
- a tool body of a rotary cutting tool, the tool body having a front end and an opposite rear end, the rear end being configured for attachment to a machine, wherein a longitudinal centre axis of the tool body extends between the rear end and the front end of the tool body, and wherein the tool body has an axially rearwardly facing rear face at its rear end;
- at least two insert pockets provided in the tool body and distributed in a circumferential direction of the tool body, wherein each one of these at least two insert pockets comprises an insert seat, which is configured to receive a cutting insert, and a chip clearance space associated with the insert seat and located adjacent to it;
- a coolant supply recess provided inside the tool body and configured to extend at least partly around the centre axis of the tool body, wherein the coolant supply recess is arranged in a central bore in the tool body that opens into the rear face of the tool body;
- at least two first intermediate coolant channels provided inside the tool body and configured to convey coolant from the coolant supply recess towards a respective insert pocket of said at least two insert pockets, wherein each one of these at least two first intermediate coolant channels has a coolant channel inlet that opens into the coolant supply recess;
- at least two first sets of coolant discharge channels, the at least two first sets of coolant discharge channels being associated to a respective insert pocket of said at least two insert pockets for injection of coolant into the associated insert pocket, wherein each first set of coolant discharge channels comprises one or more first coolant discharge channels that open into the insert pocket to which the set is associated, and wherein said at least two first intermediate coolant channels are in fluid communication with the one or more first coolant discharge channels of a respective set of said at least two first sets of coolant discharge channels;
- at least two second intermediate coolant channels provided inside the tool body and configured to convey coolant from the coolant supply recess towards a respective insert pocket of said at least two insert pockets, wherein each one of these at least two second intermediate coolant channels has a coolant channel inlet that opens into the coolant supply recess;
- at least two second sets of coolant discharge channels, the at least two second sets of coolant discharge channels being associated to a respective insert pocket of said at least two insert pockets for injection of coolant into the associated insert pocket, wherein each second set of coolant discharge channels comprises one or more second coolant discharge channels that open into the insert pocket to which the set is associated, and wherein said at least two second intermediate coolant channels are in fluid communication with the one or more second coolant discharge channels of a respective set of said at least two second sets of coolant discharge channels; and
- a closure element that is releasably mountable in the coolant supply recess through the central bore in the tool body or movably mounted in the coolant supply recess, wherein the closure element is settable in a closing position in the coolant supply recess, in which closing position the closure element is configured to block the coolant channel inlet of each one of said at least two second intermediate coolant channels while leaving the coolant channel inlet of each one of said at least two first intermediate coolant channels unblocked to thereby prevent coolant flow into the second intermediate coolant channels from the coolant supply recess and allow coolant flow into the first intermediate coolant channels from the coolant supply recess.

In this context, that the first intermediate coolant channels are in fluid communication with the first coolant discharge channels of a respective set of said first sets of coolant discharge channels implies that each first intermediate coolant channel is configured to receive coolant from the coolant supply recess and pass the received coolant on to the first coolant discharge channels of the associated first set of coolant discharge channels. In the corresponding manner, that the second intermediate coolant channels are in fluid communication with the second coolant discharge channels of a respective set of said second sets of coolant discharge channels implies that each second intermediate coolant channel is configured to receive coolant from the coolant supply recess and pass the received coolant on to the second coolant discharge channels of the associated second set of coolant discharge channels.

When the tool body included in the tool system of the invention is used for machining of a workpiece with cutting inserts mounted in the insert seats of the insert pockets in the tool body and with the tool body mounted to a tool holder, coolant is intended to be introduced into the coolant supply recess in the tool body from coolant supply channels in the tool holder and delivered from the coolant supply recess to the insert pockets through the first and second intermediate coolant channels and the associated first and second sets of coolant discharge channels. When the tool body is set up for operation in a first coolant supply mode without the closure element in the closing position in the coolant supply recess, coolant will be supplied from the coolant supply recess to all first and second intermediate coolant channels and thereby injected into each individual insert pocket through the first coolant discharge channels that open into the insert pocket and also through the second coolant discharge channels that open into the insert pocket. When the tool body is set up for operation in a second coolant supply mode with the closure element in the closing position in the coolant supply recess, coolant will be supplied from the coolant supply recess only to the first intermediate coolant channels and not to any of the second intermediate coolant channels, which implies that coolant is injected into each individual insert pocket only through the first coolant discharge channels that open into the insert pocket and not through any of the second coolant discharge channels that open into the insert pocket. The second coolant supply mode is intended to be used in operating situations when a satisfactory cooling and/or chip evacuation can be achieved with a reduced flow of coolant, whereas the first coolant supply mode is intended to be used in operating situations when a larger flow of coolant is required for a satisfactory cooling and/or chip evacuation, and/or when it is required to inject coolant to a larger area/space in the chip room, and/or to a larger part of the cutting edge, to achieve a satisfactory effect. By closing some of the coolant channels in the tool body by means of the closure element, and thereby reducing the flow of coolant through the tool body and/or cutting off supply of coolant to certain area/space in the chip room and/or some parts of the cutting edge, when so possible in view of the operating conditions, the degeneration of the coolant is reduced and the energy required for supplying the coolant to the insert pockets is reduced. In the second coolant supply mode an increase of the coolant pressure and velocity through the first coolant discharge channels is achieved and thereby a more efficient cooling and flushing of a certain area of the cutting edge or chip room is achieved.

The coolant supply recess preferably has an annular bottom surface that faces the rear end of the tool body and that extends around the centre axis of the tool body, and an inner peripheral wall that extends from said bottom surface in a direction towards the rear end of the tool body and that surrounds the centre axis of the tool body, wherein the coolant channel inlet of each one of said at least two second intermediate coolant channels opens into said bottom surface of the coolant supply recess. In this case, the closure element suitably has the shape of a closed or open ring and is configured to fit onto the annular bottom surface of the coolant supply recess. Said annular bottom surface of the coolant supply recess preferably is a planar annular bottom surface that is perpendicular to and extends around the centre axis of the tool body.

According to an embodiment of the invention, the closure element is insertable into the coolant supply recess through the central bore in the tool body and releasably mountable onto said annular bottom surface of the coolant supply recess. In this case, the closure element is to be completely removed from the tool body when the tool body is set up for operation in the above-mentioned first coolant supply mode, wherein the closure element is to be inserted into the coolant supply recess through the central bore in the tool body and mounted onto the annular bottom surface of the coolant supply recess when the tool body is set up for operation in the above-mentioned second coolant supply mode.

According to another embodiment of the invention, the tool system comprises one or more fastening elements in the form of screws, by means of which the closure element may be releasably fixed in its closing position in the coolant supply recess, wherein these one or more fastening elements are configured to extend through a respective through hole in the closure element and to be in threaded engagement with a respective internally threaded hole in the annular bottom surface of the coolant supply recess when the closure element is fixed in its closing position in the coolant supply recess.

As an alternative to a releasably mounted closure element that is to be removed from the tool body when switching from the second coolant supply mode to the first coolant supply mode, the closure element may be permanently mounted in the coolant supply recess in the tool body and comprise a moveable closing member that is moveable, for instance by sliding on a surface of the coolant supply recess or by sliding on another part of the closure element, between the above-mentioned closing position, in which the closing member blocks the coolant channel inlets of the second intermediate coolant channels while leaving the coolant channel inlets of the first intermediate coolant channels unblocked, and a non-closing position, in which the closing member leaves the coolant channel inlets of all the first and second intermediate coolant channels unblocked. In this case, the moveable closing member may be accessible through the central bore in the tool body such that a tool operator may reach the closing member directly by one or more fingers or by a separate tool in order to move the closing member in either direction between the closing position and the non-closing position.

According to another embodiment of the invention, the coolant channel inlet of each one of said at least two first intermediate coolant channels opens into said inner peripheral wall of the coolant supply recess. In this case, the closure element may be configured to cover the entire annular bottom surface of the coolant supply recess in its closing position without obstructing the coolant channel inlets of the first intermediate coolant channels. The coolant channel inlets of the first intermediate coolant channels may as an alternative open into the annular bottom surface of the coolant supply recess, wherein the closure element is provided with through holes that are configured to be aligned with the coolant channel inlets of a respective one of the first intermediate coolant channels when the closure element is in its closing position in the coolant supply recess.

The above-mentioned annular bottom surface of the coolant supply recess is preferably planar and perpendicular to the centre axis of the tool body. In this case, the closure element suitably has a planar bottom surface that is configured to fit onto the annular bottom surface of the coolant supply recess.

According to embodiments the coolant channel inlet of each one of said at least two first intermediate coolant channels opens into the coolant supply recess at a first axial position, and the coolant channel inlet of each one of said at least two second intermediate coolant channels opens into the coolant supply recess at a second axial position different from the first axial position.

According to embodiments a position where the coolant channel inlet of each one of said at least two first intermediate coolant channels opens into the coolant supply recess is closer to the rear face of the tool body than a position where the coolant channel inlet of each one of said at least two second intermediate coolant channels opens into the coolant supply recess.

According to another embodiment of the invention, each first coolant discharge channel of each one of said at least two first sets of coolant discharge channels extends, preferably in a straight line, between the associated first intermediate coolant channel and the associated insert pocket and has an upstream end with a coolant inlet that opens into the associated first intermediate coolant channel. Thus, in this case, each first coolant discharge channel is connected directly to the associated first intermediate coolant channel and forms a direct connection between the associated first intermediate coolant channel and the associated insert pocket.

In the latter case, each first coolant discharge channel of each one of said at least two first sets of coolant discharge channels is preferably formed as a bore in the tool body, to thereby facilitate the manufacturing of the tool body. Furthermore, in order to facilitate the manufacturing of the tool body, each one of said at least two first intermediate coolant channels is preferably formed by one bore or two or more interconnected bores in the tool body, wherein the coolant inlet of each first coolant discharge channel of each one of said at least two first sets of coolant discharge channels opens into an inner peripheral wall of the associated first intermediate coolant channel.

According to another embodiment of the invention, each second coolant discharge channel of each one of said at least two second sets of coolant discharge channels extends, preferably in a straight line, between the associated second intermediate coolant channel and the associated insert pocket and has an upstream end with a coolant inlet that opens into the associated second intermediate coolant channel. Thus, in this case, each second coolant discharge channel is connected directly to the associated second intermediate coolant channel and forms a direct connection between the associated second intermediate coolant channel and the associated insert pocket.

In the latter case, each second coolant discharge channel of each one of said at least two second sets of coolant discharge channels is preferably formed as a bore in the tool body, to thereby facilitate the manufacturing of the tool body. Furthermore, in order to facilitate the manufacturing of the tool body, each one of said at least two second intermediate coolant channels is preferably formed by one bore or two or more interconnected bores in the tool body, wherein the coolant inlet of each second coolant discharge channel of each one of said at least two second sets of coolant discharge channels opens into an inner peripheral wall of the associated second intermediate coolant channel.

Another embodiment of the invention is characterized in:
- that the tool body has an axially forwardly facing front face at its front end and a peripheral surface that adjoins to the front face and extends from the front face towards the rear end of the tool body; and
- that the insert seat of each one of said at least two insert pockets is provided in the tool body at a transition between the front face and the peripheral surface of the tool body and comprises a space configured to accommodate a cutting insert, wherein this space is open towards the front face of the tool body in order to allow said cutting insert, when mounted in the insert seat, to project in the axial direction of the tool body beyond the front end thereof and also open towards the peripheral surface of the tool body in order to allow said cutting insert, when mounted in the insert seat, to project in the radial direction of the tool body beyond the peripheral surface thereof.

Further advantageous features of the tool system according to the present invention will appear from the description following below.

The invention also relates to a rotary cutting tool comprising a tool system of the above-mentioned type and cutting inserts releasably mountable in the insert seat of a respective insert pocket of said at least two insert pockets in the tool body. This rotary cutting tool is preferably a milling tool.

According to an embodiment of the invention, said one or more first coolant discharge channels of each one of said at least two first sets of coolant discharge channels are configured to direct coolant onto a first part of a cutting insert mounted in the insert seat of the insert pocket to which the set is associated, wherein said one or more second coolant discharge channels of each one of said at least two second sets of coolant discharge channels are configured to direct coolant onto a second part of a cutting insert mounted in the insert seat of the insert pocket to which the set is associated. Hereby, coolant can be directed onto a larger area on each cutting insert when the tool body is set up for operation in the above-mentioned first coolant supply mode and onto a smaller area on each cutting insert when the tool body is set up for operation in the above-mentioned second coolant supply mode. Said second part of the cutting insert is preferably located closer to the rear end of the tool body than said first part of the cutting insert, wherein said first part of the cutting insert may include an axially foremost first section of an active main cutting edge of the cutting insert and said second part of the cutting insert may include a second section of the active main cutting edge that adjoins to and is located axially rearward of said first section of the active main cutting edge. In the latter case, the tool body is to be set up for operation in the above-mentioned first coolant supply mode when the rotary cutting tool is used for milling with a large depth of cut and to be set up for operation in the above-mentioned second coolant supply mode when the rotary cutting tool is used for milling with a small depth of cut.

Further advantageous features of the rotary cutting tool according to the present invention will appear from the description following below.

### BRIEF DESCRIPTION OF THE DRAWINGS

With reference to the appended drawings, a specific description of embodiments of the invention cited as examples follows below. In the drawings:
- Figs 1 and 2: are partly exploded perspective views from different directions of a rotary cutting tool according to an embodiment of the present invention,
- Fig 3: is a lateral view of the rotary cutting tool of Figs 1 and 2,
- Fig 4: is a cut according to the line IV-IV in Fig 3,
- Fig 5: is a plan view from above of the rotary cutting tool of Figs 1 and 2, with no closure element mounted in the coolant supply recess in the tool body of the rotary cutting tool,
- Fig 6: is a plan view corresponding to Fig 5, with a closure element mounted in the coolant supply recess in the tool body of the rotary cutting tool,
- Fig 7: is a cut according to the line VII-VII in Fig 6,
- Fig 8a: is a cut according to the line VIIIa-VIIIa in Fig 6,
- Fig 8b: is a cut corresponding to Fig 8a, with no closure element mounted in the coolant supply recess in the tool body of the rotary cutting tool,
- Fig 9a: is a partly cut perspective view of the rotary cutting tool of Figs 1 and 2, illustrating the coolant injection into an insert pocket in the tool body of the rotary cutting tool when no closure element is mounted in the coolant supply recess in the tool body,
- Fig 9b: is a partly cut perspective view corresponding to Fig 9a, illustrating the coolant injection into an insert pocket in the tool body of the rotary cutting tool when a closure element is mounted in the coolant supply recess in the tool body,
- Fig 10: is a schematic illustration of the coolant supply recess and coolant channels included in the tool body of the rotary cutting tool of Figs 1 and 2,
- Fig 11: is a schematic illustration of the coolant supply recess and some of the coolant channels included in the tool body of the rotary cutting tool of Figs 1 and 2,
- Fig 12: is a perspective view of the rotary cutting tool of Figs 1 and 2 mounted to a tool holder,
- Fig 13: is a longitudinal cut through the rotary cutting tool and tool holder of Fig 12, with no closure element mounted in the coolant supply recess in the tool body of the rotary cutting tool,
- Fig 14a: is another longitudinal cut through the rotary cutting tool and tool holder of Fig 12, with no closure element mounted in the coolant supply recess in the tool body of the rotary cutting tool, and
- Fig 14b: is a cut corresponding to Fig 14a, with a closure element mounted in the coolant supply recess in the tool body of the rotary cutting tool.

### DETAILED DESCRIPTION OF EMBODIMENTS OF THE INVENTION

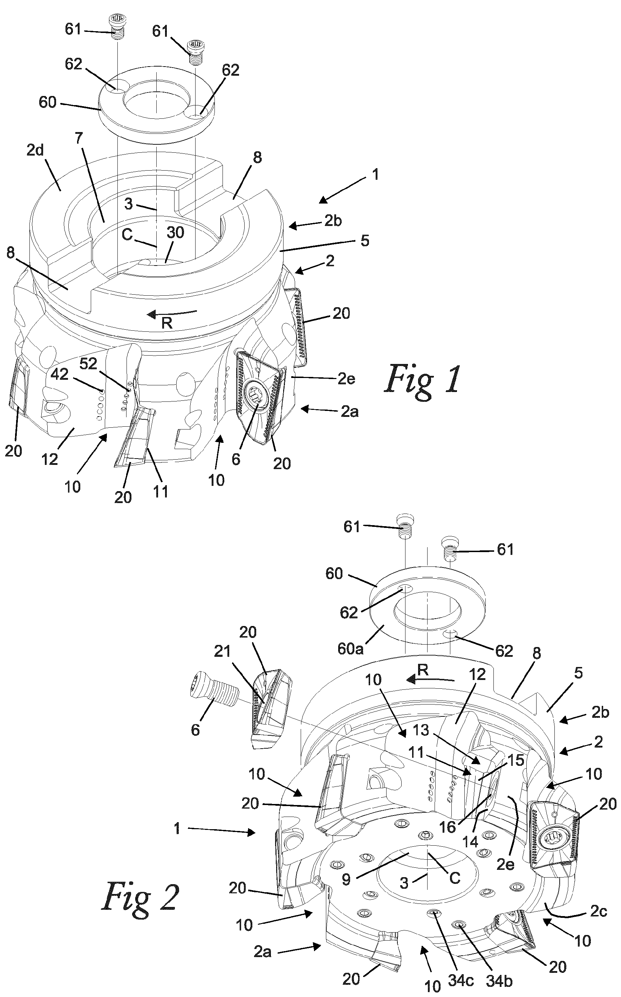

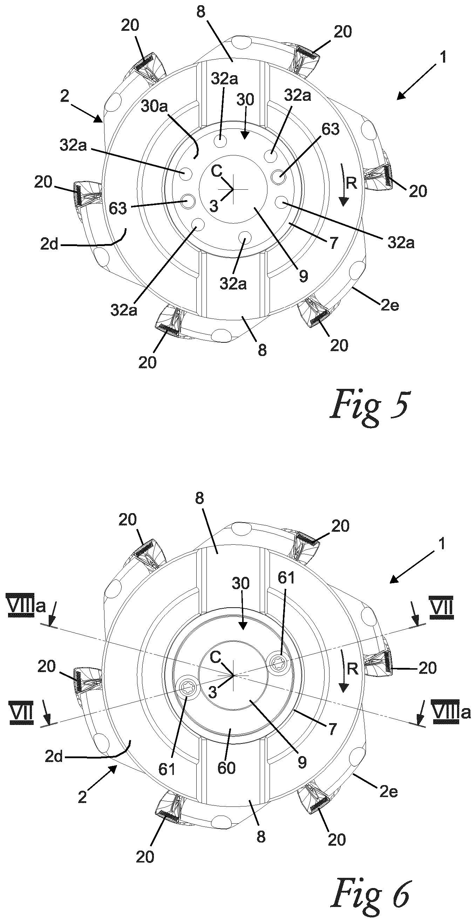

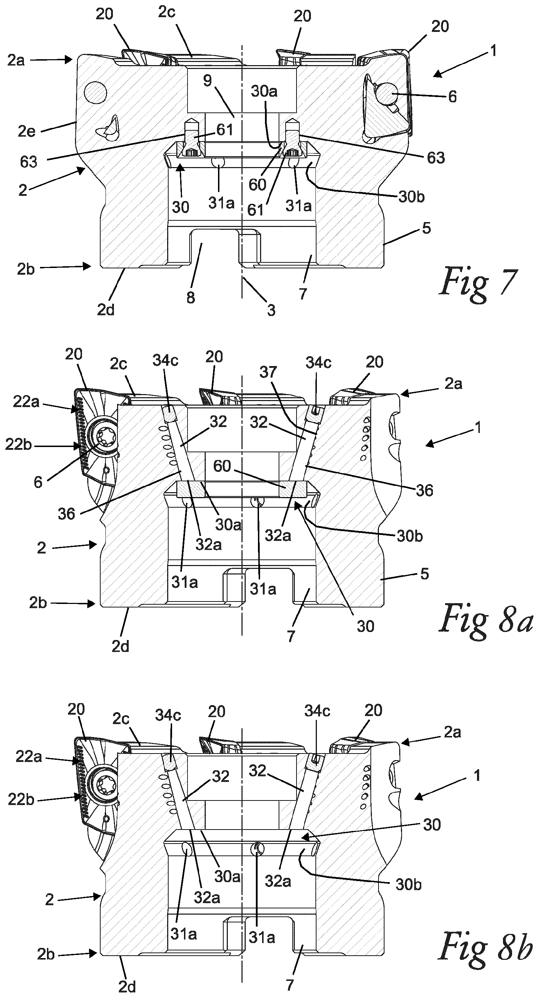

A rotary cutting tool 1 according to an embodiment of the present invention is illustrated in Figs 1-14. The rotary cutting tool 1 illustrated in Figs 1-14 has the design of a milling tool in the form of an end mill tool, which for instance may be used for square-shoulder milling or face milling. However, the rotary cutting tool of the present invention may as an alternative have the design of any other suitable type of milling tool. The rotary cutting tool of the present invention may also have the design of a drilling tool, for instance in the form of an indexable insert drill.

The rotary cutting tool 1 comprises a tool body 2 and is configured to be rotated about an axis of rotation 3. The tool body 2 has a front end 2a and an opposite rear end 2b. A longitudinal centre axis C of the tool body 2 extends between the rear end 2b and the front end 2a of the tool body, wherein this centre axis C coincides with the axis of rotation 3 of the rotary cutting tool 1. A rear part of the tool body 2 forms a connection member 5, through which the tool body 2 is mountable, directly or via an intermediate tool holder 70, to a rotating spindle or the similar of a machine, for instance a milling machine. The tool body 2 has an axially forwardly facing front face 2c at its front end 2a and an axially rearwardly facing rear face 2d at its rear end. The tool body 2 also has a peripheral surface 2e that adjoins to the front face 2c and extends from the front face 2c towards the rear end 2b of the tool body.

Several insert pockets 10 are provided in the tool body 2 and distributed in a circumferential direction of the tool body 2. These insert pockets 10 are preferably evenly, or at least substantially evenly, distributed about the centre axis C of the tool body 2. Each insert pocket 10 comprises an insert seat 11, which is configured to receive a cutting insert 20, and a chip clearance space 12 associated with the insert seat 11 and located adjacent to it. The chip clearance space 12 is provided in the tool body 2 in front of the associated insert seat 11 as seen in the intended direction of rotation R of the tool body 2. In the illustrated embodiment, each chip clearance space 12 has the form of a so-called chip pocket. Each cutting insert 20 is indexable and configured to be detachably mounted in its associated insert seat 11.

In the illustrated embodiment, the tool body 2 is provided with six insert pockets 10 spaced apart in the circumferential direction of the tool body. However, the tool body 2 may as an alternative, inter alia depending on the diameter of the tool body, be provided with any other suitable number of insert pockets 10, as long as they are at least two in number.

In the illustrated embodiment, the insert seat 11 of each insert pocket 10 is provided in the tool body 2 at a transition between the front face 2c and the peripheral surface 2e of the tool body and comprises a space 13 (see Fig 2) configured to accommodate a cutting insert 20, wherein this space 13 is open towards the front face 2c of the tool body in order to allow said cutting insert 20, when mounted in the insert seat 11, to project in the axial direction of the tool body 2 beyond the front end 2a thereof and also open towards the peripheral surface 2e of the tool body in order to allow said cutting insert 20, when mounted in the insert seat 11, to project in the radial direction of the tool body 2 beyond the peripheral surface 2e thereof.

In the illustrated embodiment, each insert seat 11 comprises a substantially tangentially facing bottom wall 14, a substantially tangentially facing top opening opposite to the bottom wall 14 and an internal wall 15 provided between the bottom wall 14 and the top opening. The top opening is facing the clearance space 12 provided in front of the insert seat 11. The internal wall 15 extends transversely to the bottom wall 14 and delimits the cutting insert accommodating space 13 together with the bottom wall 14.

In the illustrated embodiment, each cutting insert 20 has a through hole 21, which extends centrally through the cutting insert 20 between two opposite major faces of the cutting insert. The through hole 21 in the cutting insert 20 is configured to receive a fastening element 6 in the form of a screw, by means of which the cutting insert 20 may be releasably fixed in the associated insert seat 11 of the tool body 2. The fastening element 6 is configured to extend through the through hole 21 in the cutting insert 20 and to be in threaded engagement with a screw hole 16 provided in the bottom wall 14 of the insert seat 11.

Depending on the intended use of the rotary cutting tool 1, the insert seats 11, the chip clearance spaces 12 and the cutting inserts 20 may have any other suitable designs than the designs illustrated in Figs 1-14.

The cutting inserts 20 are made of hard and wear-resistant material, preferably cemented carbide, and the tool body 2 is preferably made of steel.

A coolant supply recess 30 is provided inside the tool body 2 and configured to extend at least partly around the centre axis C of the tool body. The coolant supply recess 30 is arranged in a central bore 7 in the tool body 2 that opens into the rear face 2d of the tool body. Thus, the coolant supply recess 30 is accessible from the outside of the tool body 2 through said central bore 7.

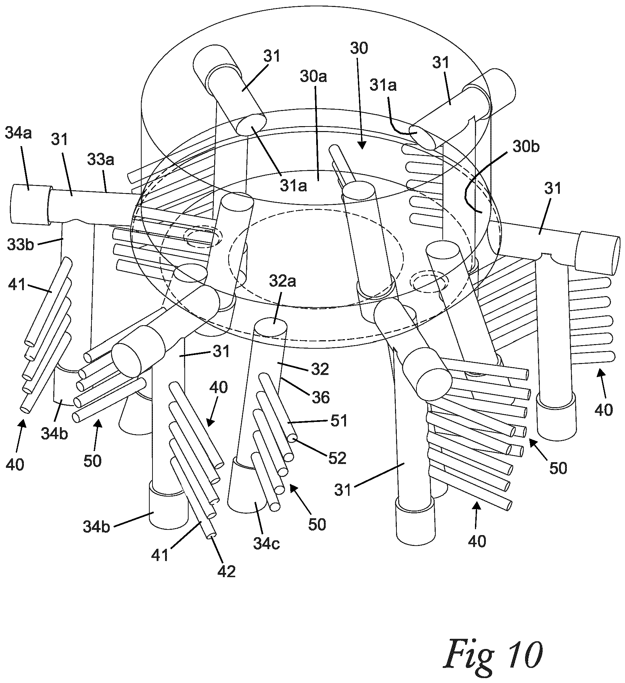

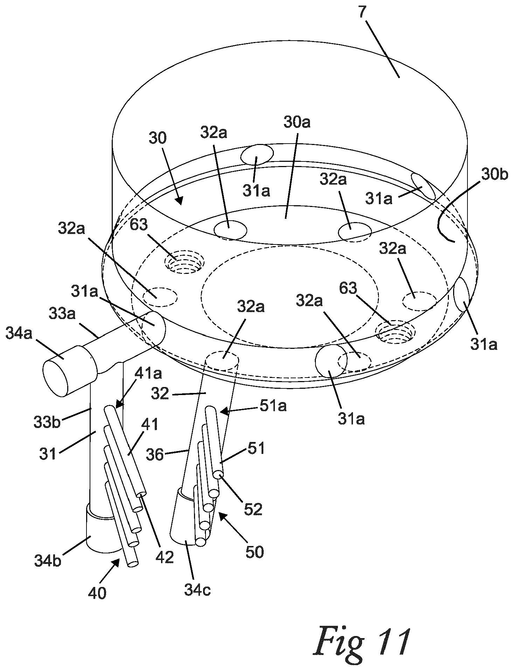

A system of coolant channels is arranged in the tool body 2 in order to allow coolant to be conveyed from the coolant supply recess 30 and injected into the insert pockets 10. In order to clearly visualize the different coolant channels included in the tool body 2, the interface between the coolant supply recess 30 and the tool body 2 as well as the interface between each coolant channel and the tool body 2 are illustrated in Fig 10. For the sake of clarity, only the coolant channels associated with one of the insert pockets 10 in the tool body 2 are illustrated in Fig 11 together with the coolant supply recess 30.

The above-mentioned system of coolant channels in the tool body 2 comprises:
- several first intermediate coolant channels 31 provided inside the tool body 2 and configured to convey coolant from the coolant supply recess 30 towards a respective insert pocket 10, wherein each one of these first intermediate coolant channels 31 has an upstream end with a coolant channel inlet 31a that opens into the coolant supply recess 30;
- several second intermediate coolant channels 32 provided inside the tool body 2 and configured to convey coolant from the coolant supply recess 30 towards a respective insert pocket 10, wherein each one of these second intermediate coolant channels 32 has an upstream end with a coolant channel inlet 32a that opens into the coolant supply recess 30;
- several first sets 40 of coolant discharge channels, these first sets 40 of coolant discharge channels being associated to a respective one of the insert pockets 10 in the tool body 2 for injection of coolant into the associated insert pocket, wherein each first set 40 of coolant discharge channels comprises one or more first coolant discharge channels 41 that open into the insert pocket 10 to which the set 40 is associated; and
- at least two second sets 50 of coolant discharge channels, these second sets 50 of coolant discharge channels being associated to a respective one of the insert pockets 10 in the tool body 2 for injection of coolant into the associated insert pocket, wherein each second set 50 of coolant discharge channels comprises one or more second coolant discharge channels 51 that open into the insert pocket 10 to which the set 50 is associated.

Each insert pocket 10 in the tool body 2 is associated with its own dedicated first intermediate coolant channel 31 and its own dedicated second intermediate coolant channel 32. Thus, the number of first intermediate coolant channels 31 corresponds to the number of insert pockets 10 in the tool body 2, and also the number of second intermediate coolant channels 32 corresponds to the number of insert pockets 10 in the tool body 2.

Each insert pocket 10 in the tool body 2 is also associated with its own dedicated first set 40 of coolant discharge channels and its own dedicated second set 50 of coolant discharge channels. Thus, the number of first sets 40 of coolant discharge channels corresponds to the number of insert pockets 10 in the tool body 2, and also the number of second sets 50 of coolant discharge channels corresponds to the number of insert pockets 10 in the tool body 2.

The first intermediate coolant channels 31 are in fluid communication with the first coolant discharge channels 41 of a respective one of said first sets 40 of coolant discharge channels, and the second intermediate coolant channels 32 are in fluid communication with the second coolant discharge channels 51 of a respective one of said second sets 50 of coolant discharge channels. Thus, each first intermediate coolant channel 31 in the tool body 2 is associated with its own dedicated first set 40 of coolant discharge channels, and each second intermediate coolant channel 32 in the tool body 2 is associated with its own dedicated second set 50 of coolant discharge channels.

Coolant may consequently be injected into an individual insert pocket 10 through the first coolant discharge channels 41 included in one of the first sets 40 of coolant discharge channels and through the second coolant discharge channels 51 included in one of the second sets 50 of coolant discharge channels, wherein the first coolant discharge channels 41 included in this first set 40 of coolant discharge channels are jointly connected to the coolant supply recess 30 through a dedicated one of the first intermediate coolant channels 31 and the second coolant discharge channels 51 included in this second set 50 of coolant discharge channels are jointly connected to the coolant supply recess 30 through a dedicated one of the second intermediate coolant channels 32.

In the illustrated embodiment, each first set 40 of coolant discharge channels comprises five first coolant discharge channels 41 that open into the insert pocket 10 to which the set 40 is associated, and each second set 50 of coolant discharge channels comprises five second coolant discharge channels 51 that open into the insert pocket 10 to which the set 50 is associated. However, each first set 40 of coolant discharge channels may be provided with any other suitable number of first coolant discharge channels 41, and each second set 50 of coolant discharge channels may be provided with any other suitable number of second coolant discharge channels 51.

In the illustrated embodiment, coolant is configured to be injected from each one of the first and second coolant discharge channels 41, 51 into the associated insert pocket 10 directly from an outlet opening 42, 52 formed by an open downstream end of the coolant discharge channel 41, 51 in question. As an alternative, each one of the first and second coolant discharge channels 41, 51 may be provided with a coolant spray nozzle at its downstream end to thereby allow coolant to be injected from the coolant discharge channel 41, 51 in question into the associated insert pocket 10 through this coolant spray nozzle.

In the illustrated embodiment, each one of the first coolant discharge channels 41 is formed as a bore in the tool body 2 and extends in a straight line between the associated first intermediate coolant channel 31 and the associated insert pocket 10 and has an upstream end 41a with a coolant inlet that opens into the associated first intermediate coolant channel 31.

In the illustrated embodiment, each one of the second coolant discharge channels 51 is formed as a bore in the tool body 2 and extends in a straight line between the associated second intermediate coolant channel 32 and the associated insert pocket 10 and has an upstream end 51a with a coolant inlet that opens into the associated second intermediate coolant channel 32.

In the illustrated example, the outlet opening 42, 52 of each one of the first and second coolant discharge channels 41, 51 is arranged in the chip clearance space 12 of the associated insert pocket 10. However, the outlet opening 42 of one or more of the first coolant discharge channels 41 and/or the outlet opening 52 of one or more of the second coolant discharge channels 51 may as an alternative be arranged in the insert seat 11 of the associated insert pocket 10.

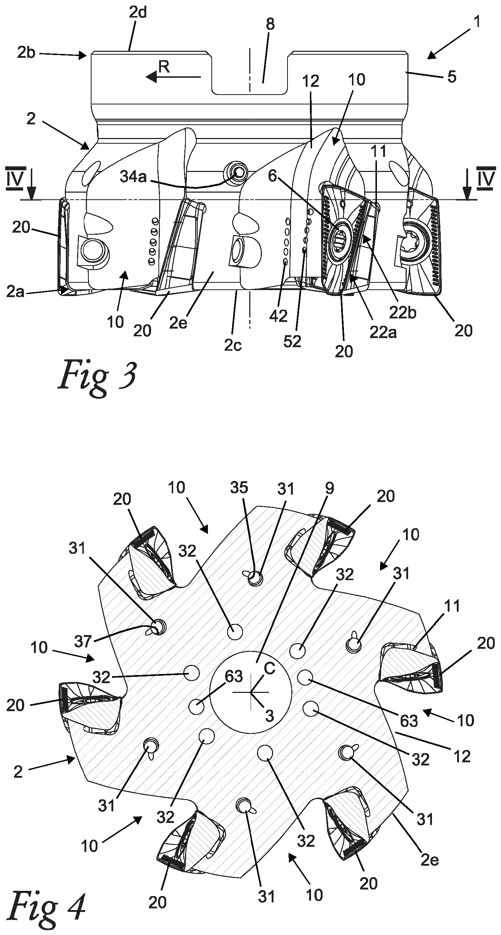

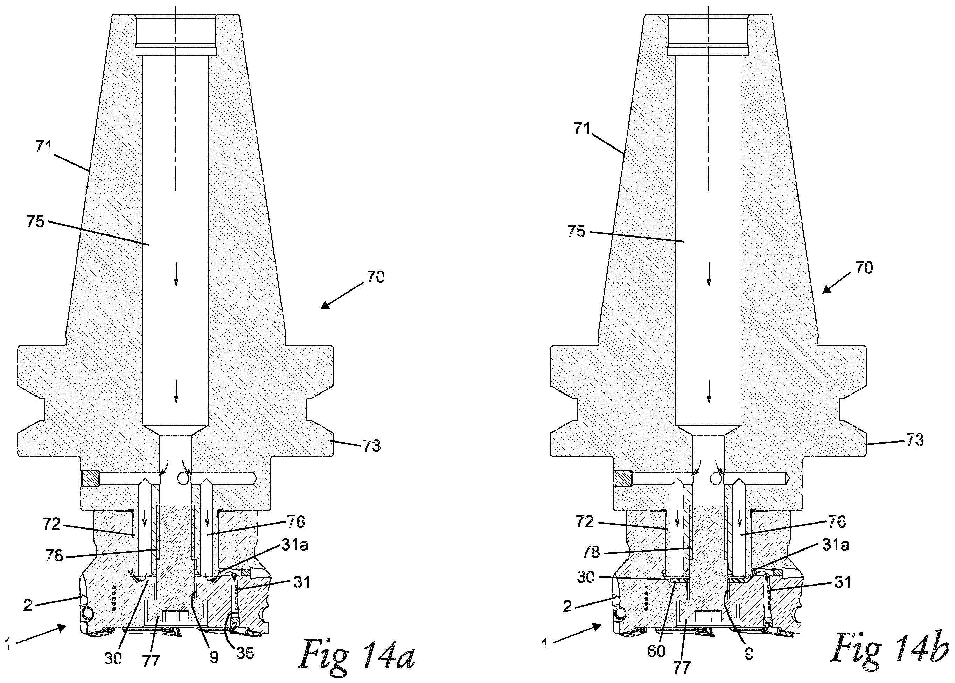

In the illustrated embodiment, each one of the first intermediate coolant channels 31 is formed by a first bore 33a and a second bore 33b, which are interconnected, wherein the first bore 33a extends from the coolant supply recess 30 towards the peripheral surface 2e of the tool body and has an open upstream end facing the coolant supply recess 30 and an opposite downstream end facing the peripheral surface 2e of the tool body, and wherein the second bore 33b extends from the first bore 33a towards the front face 2c of the tool body and has an open upstream end facing the first bore 33a and an opposite downstream end facing the front face 2c of the tool body. In this case, the coolant channel inlet 31a of the first intermediate coolant channel 31 is formed by an opening at the open upstream end of said first bore 33a. In the illustrated example, the downstream end of the first bore 33a is closed by means of a first end plug 34a that is fixed to the tool body 2, for instance via a threaded connection, and the downstream end of the second bore 33b is closed by means of a second end plug 34b that is fixed to the tool body 2, for instance via a threaded connection. In this case, the coolant inlet of each first coolant discharge channel 41 opens into an inner peripheral wall 35 (see Figs 4 and 14a) of the second bore 33b of the associated first intermediate coolant channel 31.

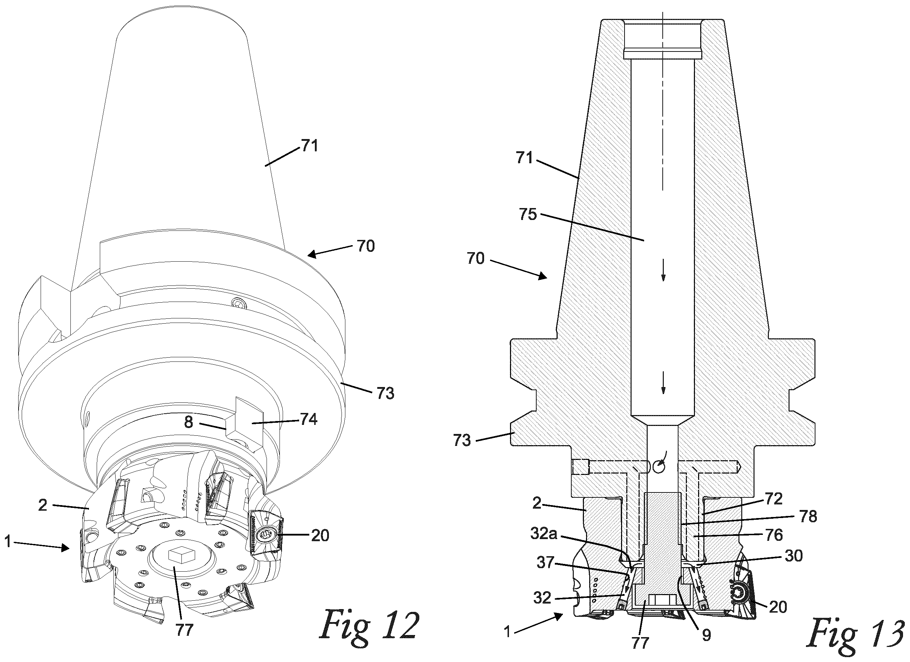

In the illustrated embodiment, each one of the second intermediate coolant channels 32 is formed by a bore 36 in the tool body 2, which extends from the coolant supply recess 30 towards the front face 2c of the tool body and which has an open upstream end facing the coolant supply recess 30 and an opposite downstream end facing the front face 2c of the tool body. In this case, the coolant channel inlet 32a of the second intermediate coolant channel 32 is formed by an opening at the open upstream end of said bore 36. In the illustrated example, the downstream end of the bore 36 is closed by means of an end plug 34c that is fixed to the tool body 2, for instance via a threaded connection. In this case, the coolant inlet of each second coolant discharge channel 51 opens into an inner peripheral wall 37 (see Figs 4 and 13) of the bore 36 of the associated second intermediate coolant channel 32.

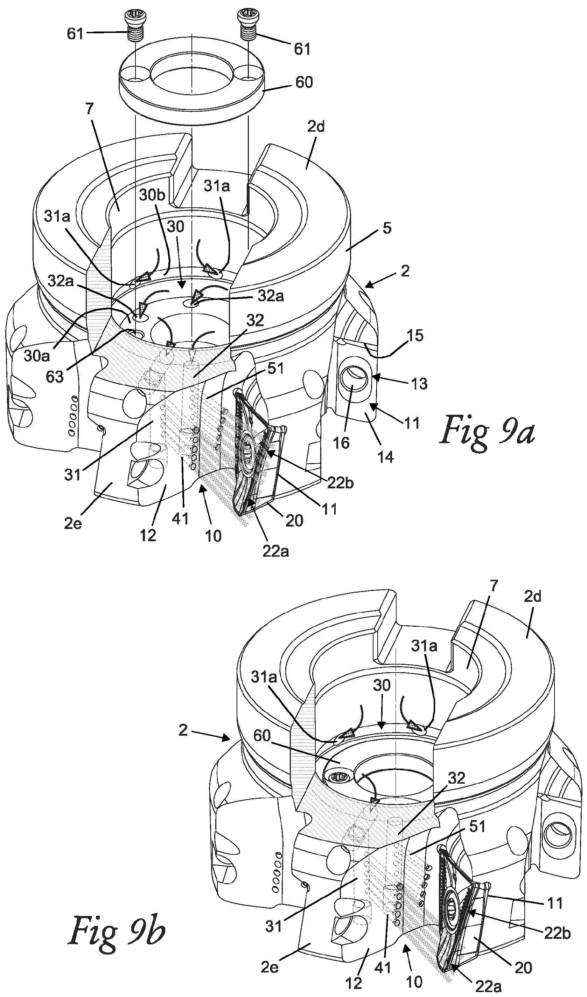

The coolant channel inlets 32a of the second intermediate coolant channels 32 can be jointly blocked by means of a closure element 60, which is settable in a closing position in the coolant supply recess 30, in which closing position the closure element 60 blocks the coolant channel inlet 32a of each one of the second intermediate coolant channels 32 while leaving the coolant channel inlet 31a of each one of the first intermediate coolant channels 31 unblocked to thereby prevent coolant flow into the second intermediate coolant channels 32 from the coolant supply recess 30 and allow coolant flow into the first intermediate coolant channels 31 from the coolant supply recess 30. In the illustrated embodiment, the closure element 60 is insertable into the coolant supply recess 30 through the central bore 7 in the tool body 2 and releasably mountable in the coolant supply recess 30. Thus, in this case, the closure element 60 is mounted in the coolant supply recess 30 when coolant is to be injected into the insert pockets 10 only through the first coolant discharge channels 41 included in the first sets 40 of coolant discharge channels and not through any of the second coolant discharge channels 51 included in the second sets 50 of coolant discharge channels, as illustrated in Fig 9b, wherein the closure element 60 is removed from the tool body 2 when coolant is to be injected into the insert pockets 10 through the first coolant discharge channels 41 included in the first sets 40 of coolant discharge channels and also through the second coolant discharge channels 51 included in the second sets 50 of coolant discharge channels, as illustrated in Fig 9a.

In each insert pocket 10, the first coolant discharge channels 41 included in the first set 40 of coolant discharge channels associated with the insert pocket 10 are configured to direct coolant onto a first part of a cutting insert 20 mounted in the insert seat 11 of the insert pocket 10, wherein the second coolant discharge channels 51 included in the second set 50 of coolant discharge channels associated with the insert pocket 10 are configured to direct coolant onto a second part of said cutting insert 20. In the illustrated example, said first part of the cutting insert 20 includes an axially foremost first section 22a (see Figs 9a and 9b) of the active main cutting edge of the cutting insert and said second part of the cutting insert 20 includes a second section 22b of the active main cutting edge that adjoins to and is located axially rearward of said first section 22a of the active main cutting edge. Thus, in this case, coolant is directed onto both sections 22a, 22b of the active main cutting edge when the tool body 2 is set up for operation in a first coolant supply mode without the closure element 60 mounted in the coolant supply recess 30, and only onto the axially foremost first section 22a of the active main cutting edge when the tool body 2 is set up for operation in a second coolant supply mode with the closure element 60 mounted in the coolant supply recess 30.

In the illustrated embodiment, the coolant supply recess 30 has an annular bottom surface 30a that faces the rear end 2b of the tool body 2 and that extends around the centre axis C of the tool body, and an inner peripheral wall 30b that extends from said bottom surface 30a in a direction towards the rear end 2b of the tool body and that surrounds the centre axis C of the tool body, wherein the coolant channel inlet 32a of each one of the second intermediate coolant channels 32 opens into said annular bottom surface 30a.

In this case, the closure element 60 has the shape of a ring, preferably a closed ring, and is configured to fit onto the annular bottom surface 30a of the coolant supply recess 30. The annular bottom surface 30a of the coolant supply recess 30 is preferably planar and perpendicular to the centre axis C of the tool body, wherein the closure element 60 suitably has a planar bottom surface 60a that is configured to fit onto the annular bottom surface 30a of the coolant supply recess 30.

In the illustrated embodiment, the closure element 60 is configured to be releasably fixed in its closing position in the coolant supply recess 30 by means of fastening elements 61 in the form of screws, which are configured to extend through a respective through hole 62 in the closure element 60 and to be in threaded engagement with a respective internally threaded hole 63 in the annular bottom surface 30a of the coolant supply recess 30 when the closure element 60 is positioned onto the annular bottom surface 30a of the coolant supply recess 30.

In the illustrated embodiment, the coolant channel inlet 31a of each one of the first intermediate coolant channels 31 opens into the inner peripheral wall 30b of the coolant supply recess 30 and is out of contact with the closure element 60 when the closure element 60 is fixed in its closing position on the annular bottom surface 30a of the coolant supply recess 30.

The tool body 2 illustrated in Figs 1-9 is configured to be mounted to a tool holder 70, for instance a tool holder in the form of a so-called face mill arbor of the type illustrated in Figs 12-14. At its rear end, the illustrated tool holder 70 has a cone-shaped spindle taper 71, through which the tool holder 70 is mountable to the spindle of a milling machine. At its front end, the tool holder 70 has a cylindrical extension in the form of a so-called pilot 72, which is configured to fit snugly into the central bore 7 in the tool body 2. A flange 73 is provided on the tool holder 70 between the spindle taper 71 and the pilot 72. The tool holder 70 also has forwardly facing drive keys 74 that fit into corresponding recesses 8 provided in the rear face 2d of the tool body 2. Internal coolant supply channels 75, 76 in the tool holder 70 are configured to deliver coolant to the coolant supply recess 30 in the tool body 2 via one or more coolant outlets provided in a front face of the pilot 72. The tool body 2 is secured to the tool holder 70 by means of a fastening element 77 in the form of a screw, which is configured to extend through a through hole 9 in the tool body 2 and to be in threaded engagement with an internally threaded hole 78 in the pilot 72. Fig 13 illustrates the flow of coolant from the coolant supply channels 75, 76 in the tool holder 70 and into the second intermediate coolant channels 32 via the coolant supply recess 30 when the tool body 2 is set up for operation in the above-mentioned first coolant supply mode without the closure element 60 mounted in the coolant supply recess 30. Fig 14a illustrates the flow of coolant from the coolant supply channels 75, 76 in the tool holder 70 and into the first intermediate coolant channels 31 via the coolant supply recess 30 when the tool body 2 is set up for operation in the first coolant supply mode. Fig 14b illustrates the flow of coolant from the coolant supply channels 75, 76 in the tool holder 70 and into the first intermediate coolant channels 31 via the coolant supply recess 30 when the tool body 2 is set up for operation in the above-mentioned second coolant supply mode with the closure element 60 mounted in the coolant supply recess 30.

The invention is of course not in any way restricted to the embodiments described above. On the contrary, many possibilities to modifications thereof will be apparent to a person with ordinary skill in the art without departing from the basic idea of the invention such as defined in the appended claims.

## Claims

1. A tool system comprising:
- a tool body (2) of a rotary cutting tool, the tool body (2) having a front end (2a) and an opposite rear end (2b), the rear end (2b) being configured for attachment to a machine, wherein a longitudinal centre axis (C) of the tool body extends between the rear end (2b) and the front end (2a) of the tool body, and wherein the tool body (2) has an axially rearwardly facing rear face (2d) at its rear end (2b);
- at least two insert pockets (10) provided in the tool body (2) and distributed in a circumferential direction of the tool body (2), wherein each one of these at least two insert pockets (10) comprises an insert seat (11), which is configured to receive a cutting insert (20), and a chip clearance space (12) associated with the insert seat (11) and located adjacent to it;
- a coolant supply recess (30) provided inside the tool body (2) and configured to extend at least partly around the centre axis (C) of the tool body, wherein the coolant supply recess (30) is arranged in a central bore (7) in the tool body (2) that opens into the rear face (2d) of the tool body;
- at least two first intermediate coolant channels (31) provided inside the tool body (2) and configured to convey coolant from the coolant supply recess (30) towards a respective insert pocket (10) of said at least two insert pockets, wherein each one of these at least two first intermediate coolant channels (31) has a coolant channel inlet (31a) that opens into the coolant supply recess (30); and
- at least two first sets (40) of coolant discharge channels, the at least two first sets (40) of coolant discharge channels being associated to a respective insert pocket (10) of said at least two insert pockets for injection of coolant into the associated insert pocket (10), wherein each first set (40) of coolant discharge channels comprises one or more first coolant discharge channels (41) that open into the insert pocket (10) to which the set is associated, and wherein said at least two first intermediate coolant channels (31) are in fluid communication with the one or more first coolant discharge channels (41) of a respective set of said at least two first sets (40) of coolant discharge channels,
**characterized in that** the tool system further comprises:
- at least two second intermediate coolant channels (32) provided inside the tool body (2) and configured to convey coolant from the coolant supply recess (30) towards a respective insert pocket (10) of said at least two insert pockets, wherein each one of these at least two second intermediate coolant channels (32) has a coolant channel inlet (32a) that opens into the coolant supply recess (30);
- at least two second sets (50) of coolant discharge channels, the at least two second sets (50) of coolant discharge channels being associated to a respective insert pocket (10) of said at least two insert pockets for injection of coolant into the associated insert pocket (10), wherein each second set (50) of coolant discharge channels comprises one or more second coolant discharge channels (51) that open into the insert pocket (10) to which the set is associated, and wherein said at least two second intermediate coolant channels (32) are in fluid communication with the one or more second coolant discharge channels (51) of a respective set of said at least two second sets (50) of coolant discharge channels; and
- a closure element (60) that is releasably mountable in the coolant supply recess (30) through the central bore (7) in the tool body (2) or movably mounted in the coolant supply recess (30), wherein the closure element (60) is settable in a closing position in the coolant supply recess (30), in which closing position the closure element (60) is configured to block the coolant channel inlet (32a) of each one of said at least two second intermediate coolant channels (32) while leaving the coolant channel inlet (31a) of each one of said at least two first intermediate coolant channels (31) unblocked to thereby prevent coolant flow into the second intermediate coolant channels (32) from the coolant supply recess (30) and allow coolant flow into the first intermediate coolant channels (31) from the coolant supply recess (30).

2. A tool system according to claim 1, **characterized in:**
- **that** the coolant supply recess (30) has an annular bottom surface (30a) that faces the rear end (2b) of the tool body (2) and that extends around the centre axis (C) of the tool body, and an inner peripheral wall (30b) that extends from said bottom surface (30a) in a direction towards the rear end (2b) of the tool body (2) and that surrounds the centre axis (C) of the tool body, wherein the coolant channel inlet (32a) of each one of said at least two second intermediate coolant channels (32) opens into said bottom surface (30a) of the coolant supply recess (30); and
- **that** the closure element (60) has the shape of a closed or open ring and is configured to fit onto the annular bottom surface (30a) of the coolant supply recess (30).

3. A tool system according to claim 2, **characterized in that** the closure element (60) is insertable into the coolant supply recess (30) through the central bore (7) in the tool body (2) and releasably mountable onto the annular bottom surface (30a) of the coolant supply recess (30).

4. A tool system according to claim 3, **characterized in that** the tool system comprises one or more fastening elements (61) in the form of screws, by means of which the closure element (60) may be releasably fixed in its closing position in the coolant supply recess (30), wherein these one or more fastening elements (61) are configured to extend through a respective through hole (62) in the closure element (60) and to be in threaded engagement with a respective internally threaded hole (63) in the annular bottom surface (30a) of the coolant supply recess (30) when the closure element (60) is fixed in its closing position in the coolant supply recess (30).

5. A tool system according to any of claims 2-4, **characterized in that** the coolant channel inlet (31a) of each one of said at least two first intermediate coolant channels (31) opens into said inner peripheral wall (30b) of the coolant supply recess (30).

6. A tool system according to any of claims 2-5, **characterized in that** the annular bottom surface (30a) of the coolant supply recess (30) is planar and perpendicular to the centre axis (C) of the tool body.

7. A tool system according to claim 6, **characterized in that** the closure element (60) has a planar bottom surface (30a) that is configured to fit onto the annular bottom surface (30a) of the coolant supply recess (30).

8. A tool system according to any of claims 1-7, **characterized in that** each first coolant discharge channel (41) of each one of said at least two first sets (40) of coolant discharge channels extends, preferably in a straight line, between the associated first intermediate coolant channel (31) and the associated insert pocket (10) and has an upstream end (41a) with a coolant inlet that opens into the associated first intermediate coolant channel (31).

9. A tool system according to claim 8, **characterized in that** each first coolant discharge channel (41) of each one of said at least two first sets (40) of coolant discharge channels is formed as a bore in the tool body (2).

10. A tool system according to claim 8 or 9, **characterized in that** each one of said at least two first intermediate coolant channels (31) is formed by one or more bores (33a, 33b) in the tool body (2), wherein the coolant inlet of each first coolant discharge channel (41) of each one of said at least two first sets (40) of coolant discharge channels opens into an inner peripheral wall (35) of the associated first intermediate coolant channel (31).

11. A tool system according to any of claims 1-10, **characterized in that** each second coolant discharge channel (51) of each one of said at least two second sets (50) of coolant discharge channels extends, preferably in a straight line, between the associated second intermediate coolant channel (32) and the associated insert pocket (10) and has an upstream end (50a) with a coolant inlet that opens into the associated second intermediate coolant channel (32).

12. A tool system according to claim 11, **characterized in that** each second coolant discharge channel (51) of each one of said at least two second sets (50) of coolant discharge channels is formed as a bore in the tool body (2).

13. A tool system according to claim 11 or 12, **characterized in that** each one of said at least two second intermediate coolant channels (32) is formed by one or more bores (36) in the tool body (2), wherein the coolant inlet of each second coolant discharge channel (51) of each one of said at least two second sets (50) of coolant discharge channels opens into an inner peripheral wall (37) of the associated second intermediate coolant channel (32).

14. A rotary cutting tool, preferably in the form of a milling tool, comprising a tool system according to any of claims 1-13 and cutting inserts (20) releasably mountable in the insert seat (11) of a respective insert pocket (10) of said at least two insert pockets (10) in the tool body (2).

15. A rotary cutting tool according to claim 14, wherein said one or more first coolant discharge channels (41) of each one of said at least two first sets (40) of coolant discharge channels are configured to direct coolant onto a first part of a cutting insert (20) mounted in the insert seat (11) of the insert pocket (10) to which the set is associated, and wherein said one or more second coolant discharge channels (51) of each one of said at least two second sets (50) of coolant discharge channels are configured to direct coolant onto a second part of a cutting insert (20) mounted in the insert seat (11) of the insert pocket (10) to which the set is associated, said second part of the cutting insert (20) preferably being located closer to the rear end (2b) of the tool body (2) than said first part of the cutting insert (20).
